# EUROPEAN PATENT SPECIFICATION

(11) **EP 0 472 840 B1**
(45) Date of publication and mention of the grant of the patent: **27.09.1995**
(21) Application number: 91110192.1
(22) Date of filing: 20.06.1991
(51) Int. Cl.: B29C 45/17, D06F 37/02, D06F 37/06

(54) **Method for making plastic drums for laundry washers and a drum thus made**
Verfahren zum Herstellen von Trommeln aus Kunststoff für Wäschereiwaschmaschinen und so hergestellte Trommel
Procédé pour fabriquer des tambours en matière plastique pour machines à laver le linge et tambour ainsi fabriqué

(30) Priority: 31.08.1990 IT 4575290
(43) Date of publication of application: 04.03.1992
(73) Proprietor: Zanussi Elettrodomestici S.p.A., I-33170 Pordenone (IT)
(72) Inventor: Tabasso, Mario, I-33080 Porcia, Pordenone (IT); Durazzani, Piero, I-33080 Porcia, Pordenone (IT)
(74) Representative: Grünecker, Kinkeldey, Stockmair & Schwanhäusser Anwaltssozietät

(56) References cited:
- EP-A- 0 083 302
- EP-A- 0 374 519
- GB-A- 2 158 002

## Description

The invention relates to a plastic laundering drum according to the preamble of claim 1.

The invention also relates to a method for making a plastic drum for a laundry washer according to the preamble of claim 5, specifically for making structurally a rigid and resistant drum in a simple manner and with a reduced consumption of material by comparison to conventional drums of this type.

Such known plastic drums for laundry washers (EP-A-0 374 519) substantially comprise a rigid structure composed of a cylindrical circumferential wall, a circular bottom wall, and a separately formed annular front wall adapted to be secured to the rigid drum structure by per se known fastener means.

The interior surface of the cylindrical circumferential wall is usually provided with paddles or stringers, and a radial metal structure is mounted on the exterior of the bottom wall for connection of the drum to the drum shaft.

The provision of the stringers is on the one hand necessary for the entrainment of the laundry in the washing liquid and for imparting increased mechanical resistance and structural strength to the drum, but presents, on the other hand, the disadvantage of requiring greater amounts of material and additional manufacturing steps.

It is therefore an object of the invention to provide a laundry washer drum having structural and functional characteristics equal or even superior to those of conventional drums, and that with a reduced consumption of material and above all with a radical simplification of the manufacturing process by the employ of a manufacturing method as described in the attached claims.

The invention will be more clearly understood from the following description, given by way of example with reference to the accompanying drawings, wherein:
- fig. 1: shows an exploded perspective view of a laundry washer drum made by the present manufacturing method,
- figs. 2 and 3: show diagrammatic illustrations of two steps of the method for making the drum of fig. 1,
- fig. 4: shows a detail of the manufacturing process in making the drum according to the present invention, and
- fig. 5: shows another detail of an improved embodiment of the present invention.

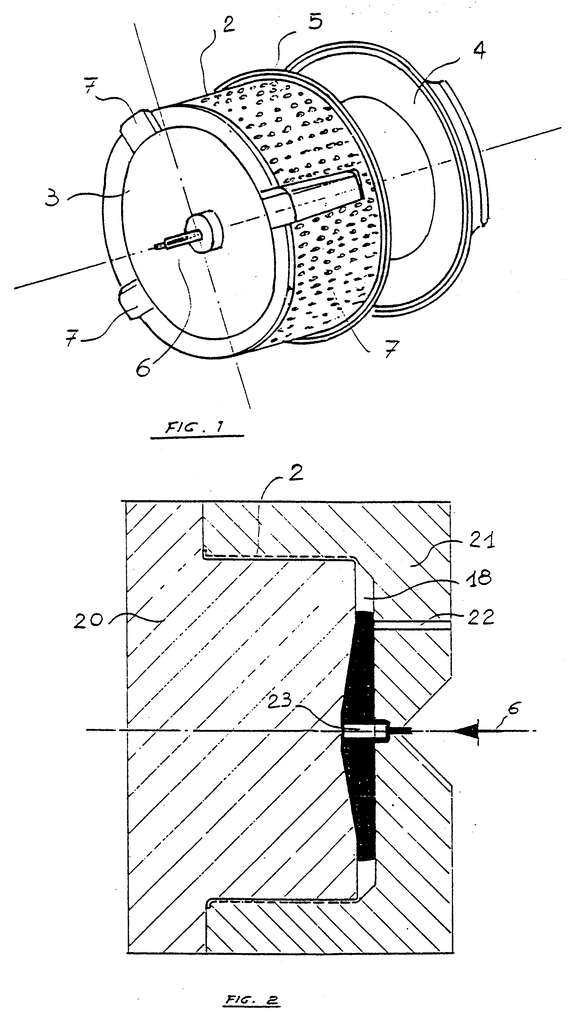

With reference to fig. 1, there is shown a laundry washer drum 1 made of a plastic material and adapted to be mounted in a per se known manner in a laundry washer, the drum being essentially composed of a rigid structure comprising a cylindrical circumferential wall 2 and a circular bottom wall 3, and a separately formed annular front wall 4 adapted to be secured to the rigid structure by conventional fastener means.

To this purpose, front wall 4 is adapted to be attached to a circular front end rim 5 formed integrally with circumferential wall 2.

Bottom wall 3 on its part may be provided with a plurality of rectilinear rigid spokes (not shown) disposed at equal circumferential spacings, and extending radially from a centrally located drum mounting shaft 6 to the circumferential boundary of the bottom wall, and with a plurality of extensions or stringers 7 disposed in a generally known manner on the interior wall surface of the drum for a likewise known purpose.

Each stringer 7 may of course be of a shape different from that shown in the drawings, without thereby departing from the spirit of the present invention.

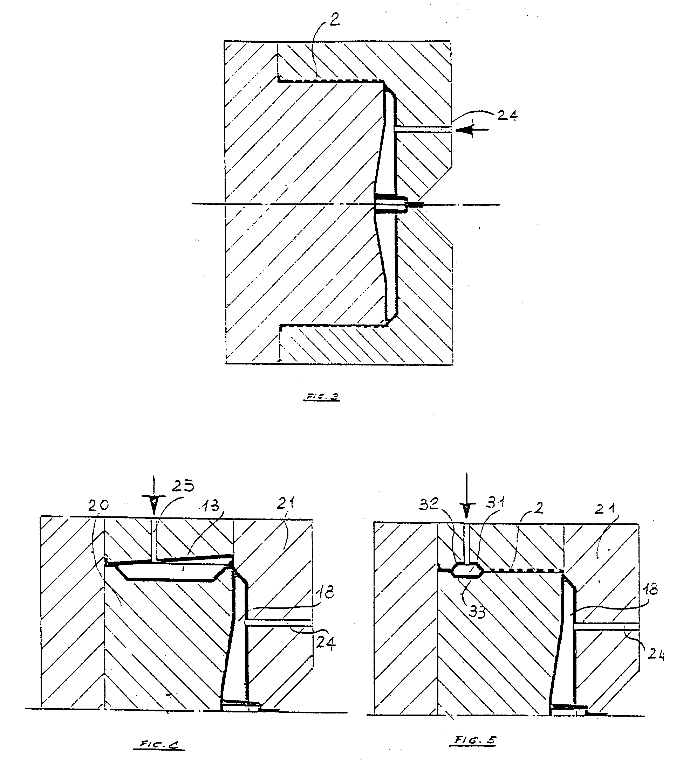

With reference now to figs. 2 and 3, there are shown two successive steps of the present method for making drum 1.

As particularly depicted in fig. 2, a first step of the manufacturing process is carried out by injecting a plastic material into a mould cavity 18 defined between a male die 20 and a female die 21. Front wall 4 of drum 1 is in the meantime formed separately by the use of a mould of conventional type (not shown). Prior to the injection of the plastic material into cavity 18 of the described mould through at least one injection port 22 of female die 21, cylindrical drum shaft 6 is mounted on a corresponding cylindrical projection 23 of male die 20.

The plastic material is subsequently injected into mould cavity 18 so as to partially fill the portion of cavity 18 defining the radial spokes and the stringers of drum 1, the respective portion having at least one gas injection port 24 opening thereinto through the wall of female die 21 for a purpose to be described.

In the second step of the manufacturing process illustrated in figs. 3 and 4, air or another suitable gas is injected into the mass of plastic material contained in the mould through injection ports 24 and 25, employing conventional equipment and techniques such as the so-called blow-moulding technique.

In particular, the amount of air or gas thus injected should be sufficient to displace the plastic material to such a degree that each stringer 7 is formed with an air- or gas-containing cavity 13, while the remainder of mould cavity 18 is completely filled with the plastic material. Thanks to the provision of the internally hollow stringers 7, the thus formed laundry washer drum can be made to be structurally rigid and mechanically resistant with a reduced consumption of material as compared to conventional drums provided with stringers of massive construction.

The described drum may be still further improved in a particularly simple manner by the addition of dynamic equilibration means formed integrally with the structure of the drum itself.

It is in fact known that the active components of laundry washers are subjected to unbalanced dynamic loads both during the spin-drying phase and successive laundering phases due to the non-uniform distribution of the soaked laundry around the walls of the drum.

For eliminating or at least reducing this detrimental phenomenon, there are several conventional methods:
a) Improving the distribution of the laundry around the walls of the drum by suitably controlling the initial phase of the spin-drying operation. This requires the provision of particularly sophisticated and complex control devices permitting the speed of rotation to be very gradually increased during the initial phase.
b) Suitably dimensioning the suspension elements of the active components of the laundry washer to thereby reduce the effects of imbalance.

These expedients are applicable to laundry washers equipped with motors of any type. The actually applicable provisions include the following:
- the statically balanced design of the laundering group,
- the correct selection of the geometrical arrangement of the suspension elements (springs, shock-absorbers etc.).
- the reduction, within acceptable limits, of the strength of the suspension springs,
- the selection of optimum characteristic parameters for the shock-absorbing elements,
- increasing the mass of the active laundering group.

In this manner it is possible to obtain acceptable solutions for the compensation of the imbalance of the active laundering group at the initial phase of the spin-drying operation, and for dampening the oscillations at the laundering speed, by the acceptance, however, of
- increased cost of the shock-absorbing and balancing system,
- considerable increase of the weight of the active components, resulting in increased danger of damage during transport and increased cost of structures for protecting the housing and active components of the machine from damage during transport.

It is known, for instance from patent FR 1,213,067, that the dynamic equilibration of the laundering assembly can be obtained in an economical and simple manner by the provision on the rotatable drum of a number of movable bodies capable by suitable displacement of compensating the imbalance of the mass of the soaked laundry to thereby shift the center of gravity of the system formed by the drum and the laundry to the vicinity of the axis of the drum.

In a washing machine this effect can be readily achieved by simply causing the named bodies to be displaced by the action of centrifugal forces.

This is possible because, in the various solutions adopted for the construction of the active laundering group (drum with its axis horizontal or vertical), the drum does not actually rotate about its geometric axis, but rather about an axis located between the imbalanced mass of the laundry and the geometric axis of the drum, the former being spaced from the latter by a distance depending on the magnitude of the imbalanced mass.

Taking these facts into account, a number of movable bodies provided on the drum will revolve about this same axis of rotation and tend, under the action of centrifugal forces, to assume equipotential positions with respect to this rotation, that is, positions opposite to the imbalanced mass of the laundry with respect to the drum axis.

In this manner one obtains a compensation of the imbalanced mass, because the center of gravity of the system "imbalanced mass + compensation mass" is shifted to the vicinity of the geometric axis of the drum.

If for instance the movable compensation mass is embodied in a hollow annular collar 31 partially filled with water and fixedly connected to the wall of the drum (fig. 5), the spin-drying operation will cause the water to assume the shape of a cylindrical body the axis of which coincides with the actual axis of rotation of the drum assembly, thus compensating the imbalanced mass of the laundry.

The above mentioned improvement thus consists in providing the drum with at least one of these hollow annular collars 31 formed integrally with the remainder of drum 1 by using the same technology as in the drum-forming process.

In an embodiment shown by way of example in fig. 5, annular collar 31 is located on the inside of the drum for a laundry washer of the front-loading type, and disposed adjacent the front rim of the cylindrical circumferential wall. It is defined on the outside by the inner wall surface 32 of the drum, and on the inside, by a semiannular surface 33 containing the movable equilibration mass, preferably a liquid of a heavy specific weight.

The construction of the described drum can thus be completed by a fully automatic process and in a simple, reliable and economic manner.

## Claims

1. A plastic laundering drum for a laundry washer, said drum comprising a rigid structure composed of a cylindrical circumferential wall (2) and a circular bottom wall (3) and a circular front wall (4) adapted to be secured to said rigid structure by fastner means,
**characterized by**
at least one hollow gas-filled stringer (7) provided on the cylindrical circumferential wall.

2. A plastic laundering drum according to claim 1,
**characterized in that** a plurality of hollow stringers are provided, which are subtantially parallel to the axis of the drum.

3. A plastic laundering drum according to claim 1
**characterized in that** at least one hollow stringer being an annular stringer surrounding said circumferential wall.

4. A plastic laundering drum according to claim 3
**characterized in that** said at least one hollow annular stringer being partly filled with a fluid.

5. A method for making a plastic laundering drum
comprising a rigid structure composed of a cylindrical circumferential wall (2) and a circular bottom wall (3) and a circular front wall (4) adapted to be secured to said rigid structure by fastner means, said method comprising the steps of injecting an amount of plastic material into the cavity of a mold used for forming the rigid structure, **characterized by** injecting through at least one injection port (25) gas into the liquid plastic material at a location of the mold where the circumferential wall of the drum is formed in order to generate at least one gas-filled hollow stringer on said circumferential wall of the drum.

## Patentansprüche

1. Plastikwaschtrommel für eine Waschmaschine, wobei die Trommel aus einer steifen Struktur, die sich aus einer zylindrischen umlaufenden Wand (2) und einer kreisförmigen Bodenwand (3) zusammensetzt, sowie aus einer kreisförmigen Vorderwand (4) besteht, die so ausgelegt ist, daß sie über eine Befestigungseinrichtung mit der steifen Struktur verbindbar ist, gekennzeichnet durch zumindest eine hohle gasgefüllte Verstrebung (7), die sich an der zylindrischen umlaufenden Wand befindet.

2. Plastikwaschtrommel nach Anspruch 1, dadurch gekennzeichnet, daß eine Vielzahl hohler Verstrebungen vorgesehen sind, die sich etwa parallel zur Achse der Trommel erstrecken.

3. Plastikwaschtrommel nach Anspruch 1, dadurch gekennzeichnet, daß zumindest eine hohle Verstrebung eine runde Verstrebung ist, die die umlaufende Wand umgibt.

4. Plastikwaschtrommel nach Anspruch 3, dadurch gekennzeichnet, daß die zumindest eine hohle runde Verstrebung teilweise mit einer Flüssigkeit gefüllt ist.

5. Verfahren zum Herstellen einer Plastikwaschtrommel, bestehend aus einer steifen Struktur, die sich aus einer zylindrischen umlaufenden Wand (2) und einer kreisförmigen Bodenwand (3) zusammensetzt, sowie einer kreisförmigen Vorderwand (4), besteht, die so ausgelegt ist, daß sie über eine Befestigungseinrichtung mit der steifen Struktur verbindbar ist, wobei bei dem Verfahren eine Menge von Plastikmaterial in einen Hohlraum einer Gußform, die zum Formen der steifen Struktur verwendet wird, eingeführt wird, dadurch gekennzeichnet, daß zumindest in eine Einführungsöffnung (25) Gas in das flüssige Plastikmaterial an einer Stelle der Form eingeführt wird, an der die umlaufende Wand der Trommel gebildet wird, um zumindest eine gasgefüllte hohle Verstrebung an der umlaufenden Wand der Trommel zu erzeugen.

## Revendications

1. Tambour de lavage en matière plastique pour un lavelinge, ce tambour comprenant une structure rigide constituée par une paroi circonférentielle cylindrique (2) et une paroi de fond circulaire (3), et une paroi frontale circulaire (4) adaptée pour être fixée sur cette structure rigide par des moyens de fixation, caractérisé en ce qu'au moins une nervure creuse remplie de gaz (7) est prévue sur la paroi circonférentielle cylindrique.

2. Tambour de lavage en matière plastique selon la revendication 1, caractérisé en ce qu'il est prévu une multiplicité de nervures creuses, qui sont pratiquement parallèles à l'axe du tambour.

3. Tambour de lavage en matière plastique selon la revendication 1, caractérisé en ce qu'au moins une nervure creuse est une nervure annulaire entourant ladite paroi circonférentielle.

4. Tambour de lavage en matière plastique selon la revendication 3, caractérisé en ce que cette(ces) nervure(s) annulaire(s) creuse(s) est(sont) partiellement remplie(s) d'un fluide.

5. Procédé pour fabriquer un tambour de lavage en matière plastique, comprenant une structure rigide constituée par une paroi circonférentielle cylindrique (2) et une paroi de fond circulaire (3), et une paroi frontale circulaire (4) adaptée pour être fixée sur cette structure rigide par des moyens de fixation, ce procédé comprenant les étapes suivantes :
injecter une quantité de matière plastique dans la cavité d'un moule utilisé pour former la structure rigide, caractérisé en ce qu'on injecte à travers au moins un orifice d'injection (25) du gaz dans la matière plastique liquide à un emplacement dans le moule où la paroi circonférentielle du tambour est formée afin de produire au moins une nervure creuse remplie de gaz sur ladite paroi circonférentielle du tambour.
